Europäisches Patentamt

European Patent Office

Office européen des brevets

(11) Veröffentlichungsnummer: **0 275 394 B1**

# EUROPÄISCHE PATENTSCHRIFT

(45) Veröffentlichungstag der Patentschrift: **02.01.92**

(51) Int. Cl.⁵: **B60K 17/35**, F16D 43/22

(21) Anmeldenummer: **87116902.5**

(22) Anmeldetag: **17.11.87**

(54) **Antriebsstrang.**

(30) Priorität: **23.01.87 DE 3701843**

(43) Veröffentlichungstag der Anmeldung:
**27.07.88 Patentblatt 88/30**

(45) Bekanntmachung des Hinweises auf die
Patenterteilung:
**02.01.92 Patentblatt 92/01**

(84) Benannte Vertragsstaaten:
**DE ES FR GB IT**

(56) Entgegenhaltungen:
**EP-A- 236 695**
**DE-A- 3 507 490**
**DE-C- 451 703**
**US-A- 2 791 130**
**US-A- 4 520 691**

(73) Patentinhaber: **Dr.Ing.h.c. F. Porsche Aktiengesellschaft**
**Porschestrasse 42**
**W-7000 Stuttgart 40(DE)**

(72) Erfinder: **Gausrab, Klaus, Dipl.-Ing.**
**Knoedlergasse 4**
**W-7302 Ostfildern 2(DE)**
Erfinder: **Hauser, Joachim, Dipl.-Ing.**
**Hohweg 20**
**W-7251 Weissach(DE)**
Erfinder: **Müller, Robert**
**Badstrasse 21**
**W-7251 Weissach(DE)**

## Beschreibung

Die Erfindung bezieht sich auf einen Antriebsstrang der im Oberbegriff des Patentanspruchs 1 genannten Art.

In den US-Patentschriften 4,464,973 und 4,520,691 werden Planetengetriebe mit Eingangswelle und erstem Sonnenrad sowie zweitem Sonnenrad mit Ausgangswelle beschrieben. Die Sonnenräder wirken mit Planeträdern zusammen, die an einem Planetenträger vorgesehen sind. Die Lagerung der Eingangswelle und der Ausgangswelle erfüllt jedoch nicht besonders definierte Kraftübertragungsanforderungen eines Antriebsstrangs, insonderheit eines mit Allradantrieb ausgestatteten Personenwagens.

Aus der DE-PS 3 507 490 geht ein Planetengetriebe mit Fliehkraftbremse hervor, das in den zwei angetriebene Achsen verbindenden Antriebsstrang eines mit Allradantrieb ausgestatteten Personenwagens geschaltet ist.

Ein Antriebsstrang gemäß dem Oberbegriff des Anspruches 1 wurde bereits in der EP-A-236695 (veröffentlicht am 16.09.1987) vorgeschlagen.

Aufgabe der Erfindung ist es, die Bauteile, namentlich die Eingangswelle und die Ausgangswelle des in einen Antriebsstrang geschalteten Planetengetriebes so zu gestalten, daß sie bei kostengünstiger Herstellung und einfacher Montage die auftretenden Kräfte sowie Momente funktionsgerecht aufnehmen und übertragen.

Diese Aufgabe wird durch die kennzeichnenden Merkmale des Patentanspruchs 1 gelöst. Weitere, die Erfindung ausgestaltende Merkmale sind in den nachfolgenden Ansprüchen enthalten.

Die mit der Erfindung hauptsächlich erzielten Vorteile sind darin zu sehen, daß die Eingangswelle und die Ausgangswelle so gelagert und in das Planetengetriebe bzw. dessen Gehäuse integriert sind, daß die auftretenden Kräfte und Momente im Antriebsstrang problemlos übertragen werden. Dabei ist die Montage der beiden Wellen und auch der Teile des Planetengetriebes namentlich wegen des Lagereinsatzes der Stützplatte und der Festlegung der Eingangswelle an den beiden Kegelrollenlagern einfach. Die Bauteile, die im Gehäuse angeordnet sind, lassen sich auf einfache Weise herstellen.

Ist das Planetengetriebe mit einer Fliehkraftbremse versehen und in den Antriebsstrang eines mit Allradantrieb ausgestatteten Personenwagens integriert, so kann das Planetengetriebe und Fliehkraftbremse aufnehmende Gehäuse räumlich günstig gestaltet werden, indem die Bremsbacken der Fliehkraftbremse zwischen den Sonnenrädern des Planetengetriebes und dem Gehäuse vorgesehen sind. Das im Querschnitt kreiszylindrige Gehäuse aus einer Leichtmetallegierung weist zur Aufnahme der Reibkräfte an der Innenseite einen umlaufenden eisenmetallischen Ring auf. Dieser kann als Einsatz mit dem Gehäuse vergossen oder stoffschlüssig an letzterem befestigt werden.

In der Zeichnung wird ein Ausführungsbeispiel der Erfindung gezeigt, das nachstehend näher beschrieben ist.

Es zeigt

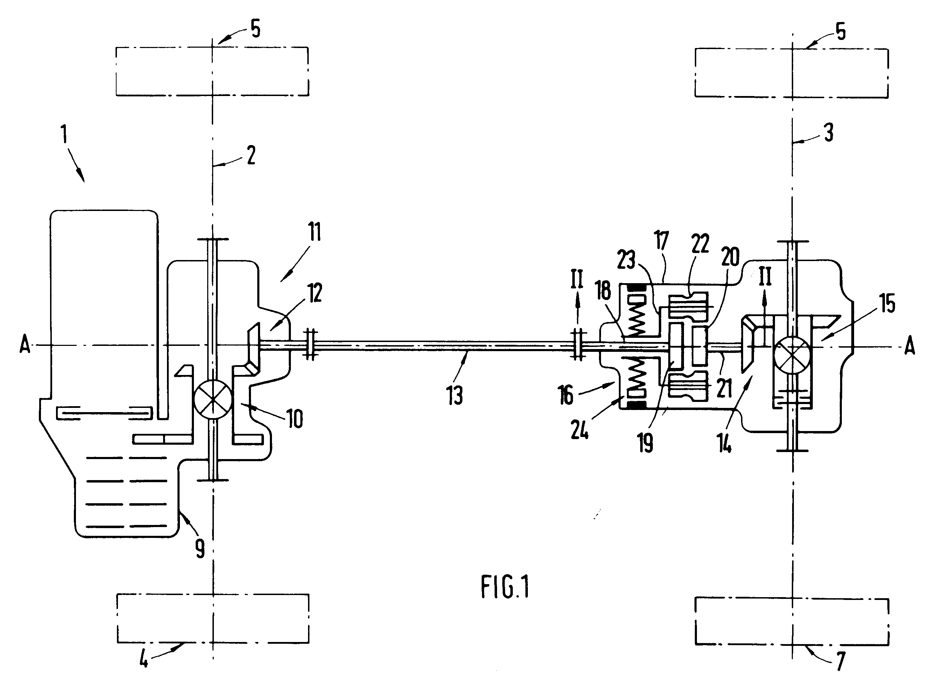

Fig. 1    ein in der Draufsicht schematisch dargestelltes Kraftfahrzeug mit einem Antriebsstrang zwischen zwei angetrieben Achsen,

Fig. 2    einen Schnitt nach der Linie II-II der Fig. 1 in größerem Maßstab,

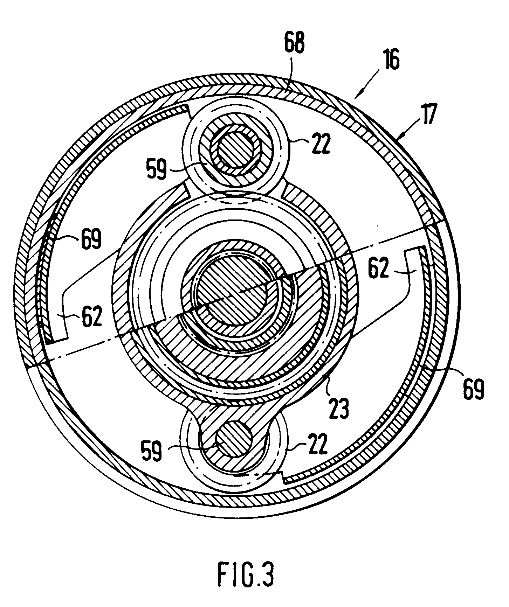

Fig. 3    einen Schnitt nach der Linie III-III der Fig. 2.

Das Kraftfahrzeug 1 umfasst eine Vorderachse 2 und eine Hinterachse 3; die Achsen sind mit Rädern 4, 5, 6, 7 verbunden. Vor der Vorderachse 2 ist eine quer zur Fahrzeuglängsachse A-A angeordnete Brennkraftmaschine 8 eingebaut, die unter Zwischenschaltung eines Schaltgetriebes 9 und eines Differentials 10 die Vorderachse 2 antreibt. Bei 11 ist ein mit dem Differential 10 zusammenwirkendes Winkelgetriebe 12 angebracht, das an einen Antriebsstrang 13 angeschlossen ist. Der Antriebsstrang 13 ist benachbart der Hinterachse 3 mit einem weiteren Winkelgetriebe 14 gekoppelt. Letzteres wirkt mit einem Differential 15 der Hinterachse 3 zusammen.

In den Antriebsstrand 13 ist ein Planetengetriebe 16 geschaltet, das in einem Gehäuse 17 untergebracht ist. Das Planetengetriebe 16 umfasst eine Eingangswelle 18 mit einem drehfest verbundenen ersten Sonnenrad 19 und ein zweites Sonnenrad 20, das auf einer Ausgangswelle 21 drehfest angebracht ist. Die Wellen 18 und 19 sowie die Räder 19 und 20 sind koaxial zueinander angeordnet. Überdies wirken die beiden Sonnenräder 18 und 19 mit Planeträdern 22 zusammen, die von einem Planetenträger 23 gehalten werden.

Das erste Sonnenrad 18 weist eine etwas größere Zähnezahl als das zweite Sonnenrad 19 auf, wobei die Planeträder eine diese Gestaltung berücksichtigende Ausbildung aufweisen. Außerdem ist das erste Sonnenrad 18 zum Planetenträger hin hoch übersetzt; etwa 16 : 1. Mit dem Planetenträger 23 verbunden ist eine Fliehkraftbremse 24. Bei Drehzahldifferenz zwischen der Vorderachse 2 und der Hinterachse 3 - Vorderachse dreht durch - bewirkt das Planetengetriebe 16 und die Fliehkraftbremse 24 eine Drehmomentübertragung an die Hinterachse 3.

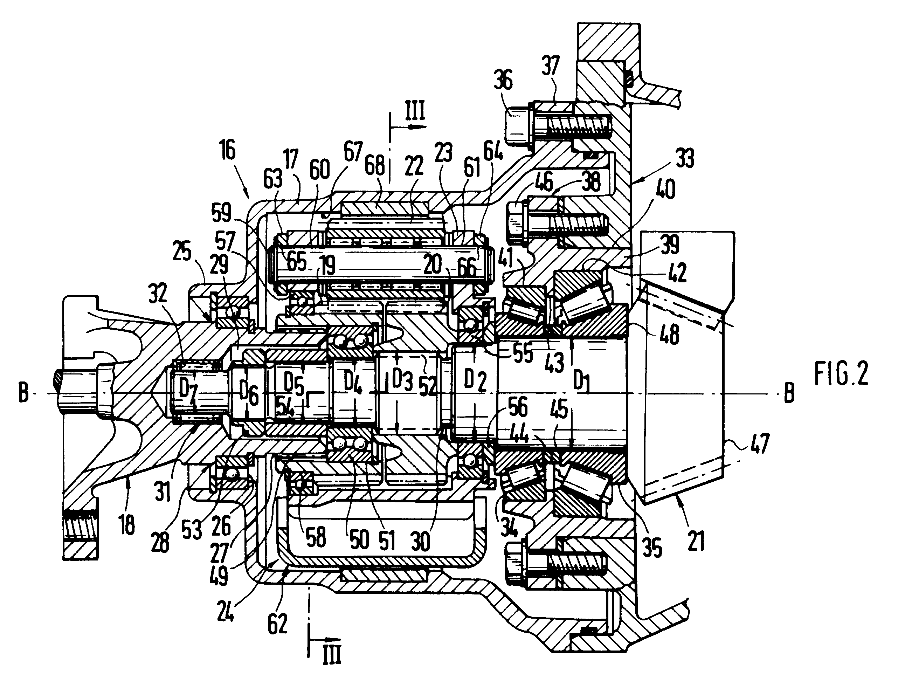

Gemäß Fig. 2 weist das aus einer Leichtmetalllegierung bestehende Gehäuse 17 mit kreiszylindrischem Querschnitt zur Lagerung der Eingangswelle 18 einen am Boden des topfförmigen Gehäuses vorgesehenen Lagerhals 25 auf, der mittels eines Kugellagers 26 die Eingangswelle 18 aufnimmt. Letztere ragt mit einem Schaft 27 in das Gehäuse 17 hinein und ist mit einer etwa bis zum freien Ende 28 des Lagerhalses 25 reichenden Einbohrung 29 versehen.

Die Ausgangswelle 21 ragt mit einem Schaft 30 durch das Gehäuse 17 hindurch und in die Eingangswelle 18 hinein und ist bei 31, das ist etwa im Bereich des Lagerhalses 25, unter Vermittlung eines Nadellagers 32 in besagter Eingangswelle gelagert.

Auf der dem Lagerhals 25 abgekehrten Seite ist die Ausgangswelle 21 in einer das topfförmige Gehäuse 17 schließenden Stützplatte 33 unter Zwischenschaltung von zwei Kegelrollenlagern 34, 35 gelagert. Die senkrecht zur Mittellängsachse B-B des Planetengetriebes 16 verlaufende Stützplatte 33 ist mittels Schrauben 36 an einem Gehäuseflansch 37 befestigt.

Im Ausführungsbeispiel besteht die Stützplatte 33 aus einem leichtmetallischen Werkstoff, weshalb die Kegelrollenlager 34, 35 in einen eisenmetallischen Grauguß-Lagereinsatz 38 eingesetzt sind. Der Lagereinsatz 38 ruht mit einem Kragen 39 in einer Bohrung 40 der Stützplatte 33 und ist mit Aufnahmen 41, 42 für die Kegelrollenlager 34, 35 versehen. Zwischen den Aufnahmen 41, 42 ist am Lagereinsatz 38 ein Steg 43 vorgesehen, an dem besagte Kegelrollenlager 34, 35 anliegen; sie liegen auch noch an die Ausgangswelle 21 umgebenden Distanzscheiben 44, 45 an. Ferner ist der Lagereinsatz 38 durch Schrauben 46 an der Stützplatte 33 gehalten.

Die Ausgangswelle 21 ist neben dem der Eingangswelle 18 abgekehrten Rollenlager 35, das einen geringfügig größeren Außendurchmesser als das Kegelrollenlager 34 aufweist, mit einem Ritzel 47 versehen, das einen sich am Kegelrollenlager 35 abstützenden Anschlag 48 besitzt.

Das erste Sonnenrad 19 steht über eine Verzahnung 49, die zwischen Schaft 27 und erstem Sonnenrad 19 vorgesehen ist, in drehfester Verbindung mit der Eingangswelle 18 und ist mittels eines Kugellagers 50, eingesetzt in eine Bohrung 51 des besagten Sonnenrades, auf der Ausgangswelle 21 gelagert. Das zweite Sonnenrad 20 ist über eine Kerbverzahnung 52 auf der Ausgangswelle 21 drehfest angeordnet.

Die Ausgangswelle 21 18 ist mit einer Schraube 53, d.h. zwischen beiden ist ein Gewinde vorgesehen, gegen das der Eingangswelle 18 zugekehrte Kegelrollenlager 34 verspannt, wobei zwischen Schraube 53 und Kegelrollenlager 34 eine Distanzbüchse 54, das Kugellager 50 im ersten Sonnenrad 19, das zweite Sonnenrad 20, ein Kugellager 55 für den Planetenträger 23 und eine Distanzscheibe 56 vorgesehen sind. Die Schraube 53 und die Distanzbüchse 54 erstrecken sich innerhalb der Einbohrung 29, die dort einen größeren Durchmesser aufweist als im Bereich des Nadellagers 32.

Zur Aufnahme der verschiedenen koaxialen Bauteile der Ausgangswelle 21 weist sie zwischen den Kegelrollenlagern 34, 35 im Lagereinsatz 38 und dem Nadellager 32 der Ausgangswelle 21 abgestufte Wellenabschnitte auf, wobei die Durchmesser ($D_1$, $D_2$, $D_3$, $D_4$, $D_5$, $D_6$ und $D_7$) dieser Wellenabschnitte in Richtung Nadellager 32 nahezu gleichmäßig werden.

Der Planetenträger 23 ist einerseits mit dem Kugellager 55 auf der Ausgangswelle 21 und andererseits mittels eines Kugellagers 57 auf einem Lagerabschnitt 58 des ersten Sonnenrades 19 gelagert. Die Planetenräder 22 sind auf Lagerbolzen 59 angebracht, die Bohrungen 60, 61 des Planetenträgers 23 durchdringen. Außerdem dienen die Lagerbolzen 59 zur Aufnahme von Bremsbacken 62 der Fliehkraftbremse 23, die im Querschnitt U-förmig ausgebildet sind. Schenkel 63, 64 der Bremsbacken 62 weisen Bohrungen 65, 66 auf, in denen sich die Lagerbolzen 59 abschnittsweise erstrecken.

Die Bremsbacken 62 sind zwischen dem Gehäuse 17 und den Sonnenrädern 19, 20 angeordnet.

Im Bereich der Bremsbacken 62 ist an der Innenseite 67 des Gehäuses 17 ein eisenmetallischer - Grauguß - , umlaufender Ring 68 vorgesehen. Der Ring 68 kann als Einsatz mit dem Gehäuse 17 vergossen oder an diesem stoffschlüssig gehalten sein. Ein Bremsbelag des Bremsbackens 62 ist mit 69 bezeichnet.

## Patentansprüche

1. Antriebsstrang (13), vorzugsweise zwischen zwei angetriebenen Achsen (Vorderachse 2; Hinterachse 3) eines Allradantrieb aufweisenden Kraftfahrzeugs (1), in den ein ein Gehäuse (17) aufweisendes Planetengetriebe (16) geschaltet ist, das eine Eingangswelle (18) mit einem ersten Sonnenrad (19) und ein zweites Sonnenrad (20) mit einer Ausgangswelle (21) umfasst, wobei die Sonnenräder (19, 20) mit an einem Planetenträger (23) angebrachten Planetenrädern (22) in Eingriff stehen und die Ausgangswelle (21) in einer Bohrung (51) des ersten Sonnenrades (19) unter Vermittlung eines Kugellagers (50) angeordnet ist und in das Gehäuse (17) des Planetengetriebes (16) eine Fliehkraftbremse (24) geschaltet ist, **dadurch gekennzeichnet,** daß Bremsbakken (62) der Fliehkraftbremse (24) zwischen den Sonnenrädern (19, 20) des Planetengetriebes (16) und dem Gehäuse (17) angeordnet sind.

2. Antriebsstrang nach Anspruch 1, **dadurch ge-**

**kennzeichnet,** daß die Bremsbakken (2) im Querschnitt U-förmig ausgebildet sind und ihre Schenkel (3, 4) auf Lagerachsen (57) der Planetenräder (22) angeordnet sind.

3. Antriebsstrang nach Anspruch 1, **dadurch gekennzeichnet,** daß das aus Leichtmetall bestehende Gehäuse (17) an seiner Innenseite (67) im Bereich der Bremsbacken (2) mit einem umlaufenden eisenmetallischen Ring (68) versehen ist.

4. Antriebsstrang nach Anspruch 3, **dadurch gekennzeichnet,** daß der Ring (68) als Einsatz mit dem Gehäuse (17) verbunden ist.

5. Antriebsstrang nach Anspruch 1, **dadurch gekennzeichnet,** daß der Ring (68) stoffschlüssig mit dem Gehäuse verbunden ist.

## Claims

1. A driving train (13), preferably between two driven axles (front axle 2; rear axle 3) of a motor vehicle (1) having on all-wheel drive, in which [driving train] is connected a planetary gearing (16) having a housing (17) and comprising an input shaft (18) with a first sun wheel (19) and a second sun wheel (20) with an output shaft (21), the sun wheels (19, 20) meshing with planetary gearwheels (22) mounted on a planetary gear carrier (23) and the output shaft (21) being arranged in a bore (51) in the first sun wheel (19) with the interposition of a ball bearing (50), and a centrifugal brake (24) being connected in the housing (17) of the planetary gearing (16), characterized in that brake pads (62) of the centrifugal brake (24) are arranged between the sun wheels (19, 20) of the planetary gearing (16) and the housing (17).

2. A driving train according to Claim 1, characterized in that the brake pads (62) are U-shaped in cross-section and their arms (63, 64) are mounted on bearing spindles (59) of the planetary gearwheels (22).

3. A driving train according to Claim 1, characterized in that the housing (17) consisting of light metal is provided on its inside (67) with a continuous ferrous metal ring (68) in the region of the brake pads (62).

4. A driving train according to Claim 3, characterized in that the ring (68) is connected to the housing (17) as an insert.

5. A driving train according to Claim 1, characterized in that the ring (68) is integrally joined to the housing.

## Revendications

1. Ensemble d'entraînement (13), de préférence entre deux essieux moteurs (essieu avant 2; essieu arrière 3), d'un véhicule automobile (1) présentant une transmission intégrale, dans lequel est mis en circuit une transmission planétaire (16), qui présente un carter (17) et un arbre d'entrée (18) avec une première roue solaire (19) et une deuxième roue solaire (20) avec un arbre de sortie (21), les roues solaires (19,20) étant en prise et l'arbre de sortie (21) étant disposé dans un alésage (51) de la première roue solaire (19), par l'intermédiaire d'un roulement à billes (50), et un frein centrifuge (24) étant mis en circuit dans le carter (17) de la transmission planétaire (16), caractérisé en ce que les mâchoires (62) du frein centrifuge (24) sont disposées entre les roues solaires (19,20) de la transmission planétaire (16) et le carter (17).

2. Ensemble d'entraînement selon la revendication 1, caractérisé en ce que les mâchoires de frein (62) ont une section transversale en forme de U et leurs ailes (63, 64) étant disposées sur des axes de palier (57) des satellites (22).

3. Ensemble d'entraînement selon la revendication 1, caractérisé en ce que le carter (17) composé en métal léger est pourvu, sur sa face intérieure (67), dans la zone des mâchoires de frein (62), d'une bague circulaire (68) en métal ferreux.

4. Ensemble d'entraînement selon la revendication 3, caractérisé en ce que la bague (68) est reliée au carter (17) à titre d'insert.

5. Ensemble d'entraînement selon la revendication 1, caractérisé en ce que la bague (68) est reliée au carter par sa matière.

FIG.1

FIG.2

FIG.3